# FASCICULE DE BREVET EUROPEEN

(11) **EP 1 960 243 B1**
(45) Date de publication et mention de la délivrance du brevet: **21.07.2010**
(21) Numéro de dépôt: 06842064.5
(22) Date de dépôt: 29.11.2006
(51) Int. Cl.: B60W 50/02

(54) **PROCEDE DE CONTROLE DU FONCTIONNEMENT D'UN VEHICULE BASE SUR UNE STRATEGIE DE DIAGNOSTIC EMBARQUE DEFINISSANT DIFFERENTS TYPES DE PANNES**
VERFAHREN ZUR STEUERUNG DES BETRIEBSZUSTANDS EINES FAHRZEUGS AUF GRUNDLAGE EINER BORDDIAGNOSESTRATEGIE ZUR DEFINITION VERSCHIEDENER FEHLERTYPEN
METHOD FOR CONTROLLING THE OPERATING CONDITION OF A VEHICLE BASED ON AN ONBOARD DIAGNOSTIC STRATEGY DEFINING DIFFERENT TYPES OF FAILURES

(30) Priorité: 13.12.2005 FR 0512625
(43) Date de publication de la demande: 27.08.2008
(73) Titulaire: Renault SAS, 92100 Boulogne Billancourt (FR)
(72) Inventeur: REGNARD DE LAGNY, Joseph, F-91290 La Norville (FR); BELAID, Abdelmalik, F-75020 Paris (FR)
(86) Numéro de dépôt international: PCT/FR2006/051253
(87) Numéro de publication internationale: WO 2007/068837

(56) Documents cités:
- WO-A-2005/012713
- WO-A-2005/068262
- WO-A1-99/43525
- US-A- 4 837 552
- US-A- 5 696 676
- US-A- 5 964 813
- US-A- 6 076 172
- US-A1- 2002 077 782
- US-A1- 2005 015 380

## Description

La présente invention concerne un procédé de contrôle du fonctionnement d'un véhicule, par exemple un véhicule automobile, faisant appel à un système de diagnostic embarqué d'au moins un calculateur électronique parmi les calculateurs électroniques de contrôle du fonctionnement du véhicule.

Un véhicule automobile comprend classiquement une pluralité de calculateurs électroniques embarqués, éventuellement connectés à des capteurs et des actionneurs, pour la réalisation de diverses fonctions de contrôle du fonctionnement du véhicule, telles que le contrôle du système d'injection du moteur, le contrôle d'une boîte de vitesse automatique, la gestion des liaisons du véhicule au sol (freinage, suspension...), etc.

Pour permettre à la fois la sécurité des usagers face à un éventuel défaut de fonctionnement détecté d'un composant ou d'un système relatif au fonctionnement d'un véhicule et la remise en état par un garagiste, les calculateurs embarquent des systèmes d'auto-diagnostic permettant de mettre en oeuvre diverses stratégies de diagnostic, électrique ou fonctionnel.

Ces stratégies de diagnostics peuvent être appliquées en permanence (cas par exemple des diagnostics de continuité électrique) ou dans des conditions spécifiques de fonctionnement (cas des diagnostics fonctionnels, par exemple diagnostic du système de suralimentation ou de l'efficacité de conversion catalytique du système de post traitement des gaz d'échappement).

Ces stratégies de diagnostic ont pour rôle de fournir au calculateur des informations de défaillance (ou « panne »), auxquelles est associé un statut (par exemple « présente », « absente »).

Le calculateur utilise alors ces informations de défaillance et les statuts associés pour appliquer des stratégies de reconfiguration (utilisation par exemple d'une valeur de remplacement lorsqu'un capteur est défaillant) et/ou de fonctionnement en mode dégradé (par exemple limitation des performances du moteur en cas de défaillance détectée du système de suralimentation).

Ces stratégies visent par ordre strictement décroissant à garantir la sécurité des usagers et de l'environnement, à garantir la fiabilité du matériel et à minimiser l'impact ressenti par l'usager.

La plupart des systèmes actuels de diagnostic embarqué considèrent quatre statuts possibles pour les pannes, sommairement décrits ci-après :
- « panne absente » : ce statut indique que, pour le dernier résultat fourni par la stratégie de diagnostic embarqué sur le cycle de fonctionnement courant, il n'y a pas de défaillance. Typiquement, lors de l'initialisation du système au début d'un nouveau cycle d'utilisation du véhicule, le statut de l'ensemble des pannes possibles prennent cette valeur.
- « panne présente » : ce statut indique que, pour le dernier résultat de diagnostic fourni par la stratégie de diagnostic embarqué sur le cycle de fonctionnement courant, il y a une défaillance. Cet état de panne n'est pas prévu pour être mémorisé lors de la perte d'alimentation en fin de cycle d'utilisation du véhicule.

- « panne mémorisée » . : ce statut indique que depuis le dernier effacement de la mémoire défaut du calculateur concerné par un outil externe de diagnostic, la panne a été détectée au moins une fois. Ce statut ne se rapporte, pas au cycle de fonctionnement courant et peut donc s'ajouter aux deux statuts précédents. Ainsi, une panne peut être absente et mémorisée, ou présente et mémorisée. Cet état de panne mémorisé est en fait prévu à des fins d'historique.
- « panne confirmée OBD » : ce statut concerne les pannes du périmètre OBD, soit le système de diagnostic embarqué de type « On Board Diagnostic » (O.B.D.), conforme à la norme ISO 14 230-4, destiné à contrôler les émissions de polluants, en décelant l'origine probable d'un dysfonctionnement, c'est-à-dire d'une défaillance d'un composant ou d'un système relatif aux émissions, qui entraîne le dépassement des limites d'émissions prévues selon des normes internationales. Le système de diagnostic embarqué OBD peut donc concerner plusieurs calculateurs d'un même véhicule automobile, pouvant avoir une influence sur les émissions de polluants, tels que le calculateur de contrôle moteur ou celui de la boite de vitesses automatique.

Selon la norme ISO 14229-UDS (pour « Unified Diagnostic Services »), les définitions des statuts précédentes sont complétées par les statuts suivants :
- « panne présente sur le cycle de fonctionnement » : ce statut est identique au statut « panne présente », mais est maintenu jusqu'à la fin du cycle de fonctionnement.
- « panne OBD présente sur le cycle de roulage et/ou sur le précédent » : ce statut correspond à une panne en cours de confirmation OBD.

La norme précitée généralise également à l'ensemble des pannes la notion de « readiness », précédemment utilisée pour les pannes du périmètre OBD, pour indiquer sous forme d'information binaire, si la stratégie de diagnostic considérée a été réalisée ou non et ce, à travers deux niveaux d'information : sur le cycle de fonctionnement et depuis le dernier effacement de la mémoire défaut du calculateur par un outil extérieur de diagnostic.

Les informations ainsi définies fournissent d'une part une aide efficace à la réparation d'éventuelles défaillances et, d'autre part, permettent de gérer la plupart des reconfigurations et/ou modes dégradés nécessaires en cas de défaillance.

Cependant, les états de panne fournissant les résultats de diagnostic pour les défaillances considérées, tels qu'ils sont utilisés dans la plupart des systèmes de contrôle du fonctionnement d'un véhicule automobile, ne permettent pas toujours le respect total des objectifs précités, à savoir garantir la sécurité des usagers et de l'environnement, garantir la fiabilité du matériel et minimiser l'impact sur l'environnement.

Notamment, lors du début d'un nouveau cycle d'utilisation du véhicule, le système de diagnostic embarqué de chaque calculateur initialise l'ensemble des états de panne cités ci-dessus, à l'exception des pannes mémorisées. Plus particulièrement, un calculateur considère lors du début de chaque nouveau cycle d'utilisation du véhicule, que l'ensemble du système de diagnostic embarqué est à l'état nominal. Aussi, l'information concernant le dernier diagnostic réalisé avant la perte d'alimentation ne peut être récupérée pour le cycle d'utilisation suivant.

Au début d'un nouveau cycle, le système ne peut donc appliquer aucune reconfiguration ni aucun mode de fonctionnement dégradé, même si une défaillance est physiquement présente sur le véhicule. Cette situation restera vraie tant que la première phase de diagnostic proprement dite ne se sera pas exécutée et que la défaillance en question n'aura pas été re-détectée par le système.

En conséquence, si une défaillance physique subsiste, le système de diagnostic embarqué, de son initialisation à la nouvelle détection de cette défaillance, fonctionnera en état « pseudo-nominal », c'est-à-dire sans qu'aucune stratégie de reconfiguration et/ou de mode dégradé ne soit appliquée, ce qui peut induire des risques de dégradations supplémentaires, voire des risques sécuritaires pour les utilisateurs et/ou l'environnement.

A titre d'exemple, la détection d'une fuite de carburant nécessite, pour des raisons de fiabilité de la stratégie de diagnostic, le fonctionnement du système pendant un temps minimal (temps de détection) dans une zone de fonctionnement donnée (zone de détection). Le diagnostic peut donc ne s'appliquer qu'après plusieurs minutes de fonctionnement et/ou kilomètres parcourus. Ainsi, lorsqu'une fuite a été détectée au cours d'un cycle d'utilisation du véhicule, il serait souhaitable, dès le début du cycle de roulage suivant, de pouvoir en informer le conducteur par un moyen approprié (allumage d'un témoin par exemple) sans qu'il soit pour cela nécessaire d'attendre l'exécution de la stratégie de diagnostic pour ce nouveau cycle d'utilisation, d'autant plus que le véhicule peut avoir des utilisateurs multiples, qui ne connaissent pas nécessairement l'historique des roulages précédents.

L'utilisation de l'état « panne mémorisée » n'est en outre pas adaptée à l'effet de reproduire le dernier résultat de diagnostic pour une défaillance considérée au début d'un cycle d'utilisation suivant. En effet, cet état peur une défaillance, considérée est irréversible et impose en conséquence le retour du véhicule auprès d'un garage pour effacement comme décrit par example dans le brevet US 4 837 552. US 4837552 révèle l'état de la technique le plus proche selon le préambule de la revendication 1. Or, il est nécessaire de prendre en compte le fait que de nombreuses défaillances, peuvent s'auto-réparer (par exemple blocage mécanique temporaire d'un composant) ou être éventuellement réparées par l'utilisateur lui-même (par exemple rebranchement d'un capteur). L'état «panne mémorisée » étant dans le cas général irréversible d'un cycle à un autre, il ne pourrait donc autoriser le systèmes a repasseur en mode nominal si la défaillance considérée n'était plus détectée.

La présente, invention a pour but de remédier à ces inconvénients en proposant un contrôle du fonctionnement d'un système utilisant au moins un calculateur électronique doté de stratégies de diagnostic embarqué, garantissant au système un fonctionnement conforme, à tout instant à la meilleure connaissance possible de son état de défaillance.

La solution est basée sur la définition d'un nouvel état de panne qui soit représentatif du dernier résultat de diagnostic, indépendamment des pertes d'alimentation entre des cycles d'utilisation consécutifs.

L'invention a donc pour objet un procédé de contrôle du fonctionnement d'un véhicule comprenant l'exécution, à chaque cycle d'utilisation du véhicule, d'au moins une phase de diagnostic appliqué à au moins un calculateur parmi les calculateurs électroniques de contrôle du fonctionnement du véhicule, au cours de laquelle ledit calculateur produit et consomme des données, au moins une des dites données étant susceptible de prendre une valeur particulière prédéterminée consécutivement à la détection d'une défaillance de fonctionnement par ledit calculateur, de sorte à indiquer un résultat de diagnostic associé à ladite défaillance, ledit procédé étant caractérisé en ce qu'il comprend la mémorisation, à la fin de chaque cycle, de ladite valeur particulière pour la défaillance considérée et l'initialisation de la phase de diagnostic au début du cycle d'utilisation suivant avec ladite valeur particulière mémorisée de sorte à reproduire, pour ladite défaillance considérée, ledit résultat de diagnostic fourni par la phase de diagnostic lors de sa dernière exécution.

Avantageusement, l'initialisation de la phase de diagnostic devant être appliquée au cycle d'utilisation suivant comprend l'application, au début dudit cycle et avant l'exécution de ladite phase de diagnostic, d'un mode de fonctionnement du véhicule adapté selon ladite valeur particulière mémorisée pour la défaillance considérée.

Selon une caractéristique, l'application d'un mode de fonctionnement adapté consiste à appliquer une stratégie de reconfiguration d'un paramètre de fonctionnement correspondant à la présence détectée de la défaillance.

Selon une autre caractéristique, l'application d'un mode de fonctionnement adapté consiste à appliquer une stratégie de mode dégradé du fonctionnement du véhicule correspondant à la présence détectée de la défaillance.

Avantageusement, une fois la phase de diagnostic exécutée pour le cycle d'utilisation suivant, si le résultat de diagnostic associé à ladite défaillance indique l'absence de ladite défaillance, ledit procédé comprend le retour à un mode de fonctionnement normal du véhicule.

Avantageusement, une fois la phase de diagnostic exécutée pour le cycle d'utilisation suivant, si le résultat de diagnostic associé à ladite défaillance confirme la présence de ladite défaillance, ledit procédé comprend le maintient du mode de fonctionnement adapté.

De préférence, le procédé selon l'invention est appliqué au contrôle du fonctionnement du groupe motopropulseur d'un véhicule automobile.

D'autres caractéristiques et avantages de la présente invention apparaîtront plus clairement à la lecture de la description suivante donnée à titre d'exemple illustratif et non limitatif et faite en référence à la figure unique suivante :

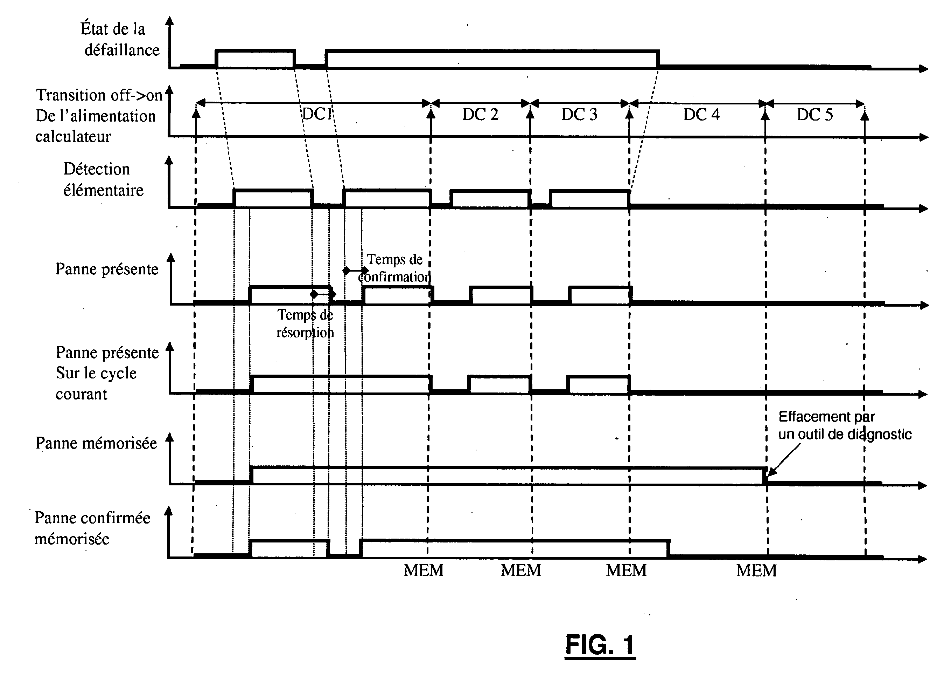

- figure 1, dont les chronogrammes illustrent le comportement de différents états de panne définis par la norme ISO 14229, en concurrence avec le comportement d'un nouvel état de panne sur lequel repose la présente invention.

La figure 1 illustre donc la solution retenue par la présente invention en décrivant le comportement de quelques états de pannes usuels, tels que ceux définis par la norme ISO 14229, ainsi que le comportement d'un état de panne particulier dénommé « panne confirmée mémorisée » dont l'objet est précisément de reproduire, pour une défaillance considérée, le résultat de diagnostic fourni lors de la dernière exécution de la phase de diagnostic, indépendamment de la perte d'alimentation.

Les états de panne usuels décrits dans la cadre de l'exemple de la figure 1 comprennent les états « panne présente », « panne présente mémorisée sur le cycle courant » et « panne mémorisée ». On trouve également un état « détection élémentaire », représentatif du comportement d'un diagnostic élémentaire non consolidé.

Ainsi, selon l'exemple, lors du premier cycle d'utilisation DC1, une défaillance est détectée par le système, comme indiqué par le passage à l'état haut du signal « état de la défaillance ». Le signal « détection élémentaire » passe alors également à l'état haut, indiquant qu'une défaillance a été détectée, cependant non encore confirmée.

Après un temps de confirmation prédéterminé, si le signal « détection élémentaire » est toujours à l'état haut, la défaillance est alors considérée confirmée et le signal d'état de défaillance « panne présente » passe à l'état haut, indiquant qu'il y a une défaillance sur le cycle de fonctionnement courant. Dans le même temps, le signal d'état de défaillance « panne présente sur le cycle courant » pour la défaillance considérée passe également à l'état haut. Ce signal d'état est donc identique au signal « panne présente », à la différence qu'il est prévu pour être maintenu dans son état haut une fois la défaillance détectée jusqu'à la fin du cycle courant DC1. Ainsi, une fois qu'une défaillance a été détectée sur le cycle courant, on n'autorise pas le signal « panne présente sur le cycle courant » pour la défaillance considérée à revenir à son état nominal.

Le statut « panne mémorisée » est également porté à l'état haut à des fins d'historique pour indiquer que la défaillance en question a été détectée au moins une fois et est prévu pour conserver cet état jusqu'à effacement de la mémoire défaut du calculateur concerné par un outil externe de diagnostic.

Enfin, le nouveau statut de panne « panne confirmée mémorisée » tel que défini par la présente invention, passe également à l'état haut une fois que la défaillance détectée a été confirmée.

Au cours du premier cycle de fonctionnement DC1, la défaillance précédemment détectée disparaît, soit qu'il s'agissait d'une fausse détection, soit qu'elle se soit auto-réparée par exemple. Cette nouvelle situation est décrite par le passage à l'état bas du signal « état de défaillance ». Le comportement de ce signal se répercute alors sur le comportement du signal « détection élémentaire », qui passe à l'état bas. De la même façon que la détection de la présence de la défaillance demandait à être confirmée avant d'influer sur le signal d'état de défaillance « panne présente », la détection de l'absence de cette défaillance doit également être confirmée. Cette détection n'influe donc sur le comportement du signal d'état de défaillance « panne présente », qu'après un temps prédéterminé appelé temps de résorption ou de fin de confirmation. Une fois ce temps écoulé, le signal « panne présente » -passe donc à l'état bas. Les signaux « panne présente sur le cycle courant » et « panne mémorisé » ne connaissent quant à eux aucun changement d'état à ce stade comme expliqué précédemment.

Par contre, le signal « panne confirmé mémorisé » adopte le même comportement que le signal « panne présente » et passe à l'état bas indiquant que la défaillance n'apparaît plus.

Par la suite, toujours au cours du même cycle de fonctionnement DC1, la défaillance est à nouveau détectée, comme l'indique le second passage à l'état haut du signal « état de la défaillance », ce qui entraîne une modification du comportement des signaux « détection élémentaire », « panne présente » et « panne confirmée mémorisée » selon le même principe qu'expliqué précédemment lors de la première détection de la défaillance sur le cycle de fonctionnement courant DC1. La défaillance est cette fois-ci confirmée détectée jusqu'à la fin du cycle courant DC1.

A la fin du cycle de fonctionnement DC1, la défaillance est donc toujours présente.

Le statut « panne confirmée mémorisée » est alors, pour la défaillance considérée, mémorisée (MEM) dans une mémoire non volatile du calculateur concerné, de sorte à pouvoir être repris lors de l'initialisation du système de diagnostic embarqué au cycle d'utilisation suivant DC2 et ainsi reproduire, pour la défaillance considérée, le résultat de diagnostic réalisé par la stratégie de diagnostic lors de sa dernière occurrence.

Au cycle d'utilisation suivant DC2, les états de panne « panne présente » et « panne présente sur le cycle courant » sont quant à eux classiquement initialisés pour retrouver leur état nominal, hormis le statut d'historique « panne mémorisée ». En conséquence, un calculateur doté d'une stratégie de diagnostic qui ne s'appuierait que sur ces états de panne, serait alors amené à considéré, lors du début du nouveau cycle d'utilisation DC2, que l'ensemble du système est effectivement à l'état nominal, malgré le fait que la défaillance détectée présente à la fin du cycle d'utilisation précédent DC1 subsiste.

Ainsi, grâce au nouveau statut mémorisé « panne confirmée mémorisée », qui reproduit, pour la défaillance considérée, le dernier résultat de diagnostic réalisé lors du cycle précédent DC1, le calculateur sait, dès le début du nouveau cycle d'utilisation DC2, que la défaillance est présente.

Selon cet aspect de l'invention, le calculateur peut donc, dès le début du nouveau cycle DC2 et avant même l'exécution proprement dite de la phase de diagnostic, appliquer la reconfiguration appropriée ou le mode dégradé le plus adapté (maintient du mode dégradé correspondant à la présence détectée de la défaillance, alerte au conducteur ou stratégie particulière).

Puis une fois la phase de diagnostic atteinte, le calculateur peut alors appliquer la stratégie la plus adaptée en fonction du dernier résultat de diagnostic tel que fourni par l'état de panne «panne présente ».

Ainsi, si le résultat du diagnostic confirme que la défaillance est toujours présente, comme illustré dans l'exemple de la figure 1 où la défaillance est toujours détectée présente au cours du cycle de fonctionnement DC2, la reconfiguration ou le mode dégradé précédemment appliqué en début de cycle avant que la première occurrence de la stratégie de diagnostic ne soit atteinte, en conformité avec l'information mémorisée fournie par l'état de panne « panne confirmée mémorisée », est maintenue.

Si au contraire, le résultat du diagnostic ne fait plus apparaître de défaillance, comme c'est le cas au cours du cycle de fonctionnement DC4 de la figure 1, la reconfiguration ou le mode dégradé précédemment appliqué en conformité avec l'information mémorisée fournie par l'état de panne « panne confirmée mémorisée.», est abandonnée et on retourne au mode de fonctionnement nominal du véhicule.

Ainsi, le fonctionnement du système est en permanence conforme à la meilleure connaissance possible de son état de défaillance.

L'invention peut être appliquée aux systèmes de contrôle du groupe motopropulseur d'un véhicule automobile. Elle peut de manière générale être appliquée à tout système utilisant un calculateur électronique doté de stratégies de diagnostic embarqué et, en particulier, à tout calculateur embarqué à bord d'un véhicule routier quelconque.

## Revendications

1. Procédé de contrôle du fonctionnement d'un véhicule comprenant l'exécution, à chaque cycle (DC1) d'utilisation du véhicule, d'au moins une phase de diagnostic appliqué à au moins un calculateur parmi les calculateurs électroniques de contrôle du fonctionnement du véhicule, au cours de laquelle ledit calculateur produit et consomme des données, au moins une des dites données étant susceptible de prendre une valeur particulière prédéterminée (« panne confirmée mémorisée ») consécutivement à la détection d'une défaillance de fonctionnement par ledit calculateur, de sorte à indiquer un résultat de diagnostic associé à ladite défaillance, ledit procédé étant **caractérisé en ce qu'**il comprend la mémorisation (MEM), à la fin de chaque cycle (DC1), de ladite valeur particulière pour la défaillance considérée et l'initialisation de la phase de diagnostic au début du cycle d'utilisation suivant (DC2) avec ladite valeur particulière mémorisée de sorte à reproduire, pour ladite défaillance considérée, ledit résultat de diagnostic fourni par la phase de diagnostic lors de sa dernière exécution.

2. Procédé selon la revendication 1, **caractérisé en ce que** l'initialisation de la phase de diagnostic devant être appliquée au cycle d'utilisation suivant comprend l'application, au début dudit cycle et avant l'exécution de ladite phase de diagnostic, d'un mode de fonctionnement du véhicule adapté selon ladite valeur particulière mémorisée pour la défaillance considérée.

3. Procédé selon la revendication 2, **caractérisé en ce que** l'application d'un mode de fonctionnement adapté consiste à appliquer une stratégie de reconfiguration d'un paramètre de fonctionnement correspondant à la présence détectée de la défaillance.

4. Procédé selon la revendication 2 ou 3, **caractérisé en ce que** l'application d'un mode de fonctionnement adapté consiste à appliquer une stratégie de mode dégradé du fonctionnement du véhicule correspondant à la présence détectée de la défaillance.

5. Procédé selon l'une quelconque des revendications 2 à 4, **caractérisé en ce que**, une fois la phase de diagnostic exécutée pour le cycle d'utilisation suivant, si le résultat de diagnostic associé à ladite défaillance indique l'absence de ladite défaillance, ledit procédé comprend le retour à un mode de fonctionnement normal du véhicule.

6. Procédé selon l'une quelconque des revendications 2 à 4, **caractérisé en ce que**, une fois la phase de diagnostic exécutée pour le cycle d'utilisation suivant, si le résultat de diagnostic associé à ladite défaillance confirme la présence de ladite défaillance, ledit procédé comprend le maintient du mode de fonctionnement adapté.

7. Procédé selon l'une quelconque des revendications précédentes, **caractérisé en ce qu'**il est appliqué au contrôle du fonctionnement du groupe motopropulseur d'un véhicule automobile.

## Claims

1. Method of monitoring the operation of a vehicle comprising the execution, on each vehicle usage cycle (DC1), of at least one diagnostic phase applied to at least one computer out of the electronic computers for monitoring the operation of the vehicle, during which said computer produces and consumes data, at least one of said data items being able to assume a particular predetermined value ("confirmed failure recorded") following the detection of an operating failure by said computer, so as to indicate a diagnostic result associated with said failure, said method being **characterized in that** it comprises the storage (MEM), at the end of each cycle (DC1), of said particular value for the failure concerned and the initialization of the diagnostic phase at the start of the next usage cycle (DC2) with said particular stored value so as to reproduce, for said failure concerned, said diagnostic result supplied by the diagnostic phase when it was last executed.

2. Method according to Claim 1, **characterized in that** the initialization of the diagnostic phase having to be applied to the next usage cycle comprises the application, at the start of said cycle and before the execution of said diagnostic phase, of an adapted operating mode of the vehicle according to said particular stored value for the failure concerned.

3. Method according to Claim 2, **characterized in that** the application of an adapted operating mode consists in applying a strategy for reconfiguring an operating parameter corresponding to the detected presence of the failure.

4. Method according to Claim 2 or 3, **characterized in that** the application of an adapted operating mode consists in applying a degraded mode strategy of the operation of the vehicle corresponding to the detected presence of the failure.

5. Method according to any one of Claims 2 to 4, **characterized in that**, once the diagnostic phase has been executed for the next usage cycle, if the diagnostic result associated with said failure indicates the absence of said failure, said method comprises the return to a normal operating mode of the vehicle.

6. Method according to any one of Claims 2 to 4, **characterized in that**, once the diagnostic phase has been executed for the next usage cycle, if the diagnostic result associated with said failure confirms the presence of said failure, said method comprises the maintenance of the adapted operating mode.

7. Method according to any one of the preceding claims, **characterized in that** it is applied to monitoring the operation of the drive train of a motor vehicle.

## Patentansprüche

1. Verfahren zur Überwachung des Betriebs eines Fahrzeugs, das die Ausführung, in jedem Nutzungszyklus (DC1) des Fahrzeugs, mindestens einer Diagnosephase enthält, die an mindestens einen Rechner unter den elektronischen Betriebsüberwachungsrechnern des Fahrzeugs angewendet wird, während der der Rechner Daten erzeugt und verbraucht, wobei mindestens einer der Datenwerte nach der Erfassung eines Funktionsausfalls durch den Rechner einen vorbestimmten besonderen Wert ("gespeicherte bestätigte Störung") annehmen kann, um ein dem Ausfall zugeordnetes Diagnoseergebnis anzuzeigen, wobei das Verfahren **dadurch gekennzeichnet ist, dass** es die Speicherung (MEM), am Ende jedes Zyklus (DC1), des besonderen Werts für den betreffenden Ausfall und die Initialisierung der Diagnosephase zu Beginn des folgenden Nutzungszyklus (DC2) mit dem gespeicherten besonderen Wert enthält, um für den betreffenden Ausfall das von der Diagnosephase bei ihrer letzten Ausführung gelieferte Diagnoseergebnis zu reproduzieren.

2. Verfahren nach Anspruch 1, **dadurch gekennzeichnet, dass** die Initialisierung der an den folgenden Nutzungszyklus anzuwendenden Diagnosephase die Anwendung, zu Beginn des Zyklus und vor der Durchführung der Diagnosephase, einer Betriebsart des Fahrzeugs enthält, die gemäß dem gespeicherten besonderen Wert für den betreffenden Ausfall angepasst ist.

3. Verfahren nach Anspruch 2, **dadurch gekennzeichnet, dass** die Anwendung einer angepassten Betriebsart darin besteht, eine Strategie der Rekonfiguration eines Betriebsparameters anzuwenden, der dem erfassten Vorhandensein des Ausfalls entspricht.

4. Verfahren nach Anspruch 2 oder 3, **dadurch gekennzeichnet, dass** die Anwendung einer angepassten Betriebsart darin besteht, eine Notlaufstrategie des Betriebs des Fahrzeugs anzuwenden, die dem erfassten Vorhandensein des Ausfalls entspricht.

5. Verfahren nach einem der Ansprüche 2 bis 4, **dadurch gekennzeichnet, dass** nach Durchführung der Diagnosephase für den folgenden Nutzungszyklus, wenn das dem Ausfall zugeordnete Diagnoseergebnis das Nichtvorhandensein des Ausfalls anzeigt, das Verfahren die Rückkehr zu einer normalen Betriebsart des Fahrzeugs enthält.

6. Verfahren nach einem der Ansprüche 2 bis 4, **dadurch gekennzeichnet, dass** nach Durchführung der Diagnosephase für den folgenden Nutzungszyklus, wenn das dem Ausfall zugeordnete Diagnoseergebnis das Vorhandensein des Ausfalls bestätigt, das Verfahren die Aufrechterhaltung der angepassten Betriebsart enthält.

7. Verfahren nach einem der vorhergehenden Ansprüche, **dadurch gekennzeichnet, dass** es zur Überwachung des Betriebs der Antriebseinheit eines Kraftfahrzeugs angewendet wird.
